# EUROPEAN PATENT APPLICATION

(11) **EP 4 119 941 A1**
(43) Date of publication of application: **18.01.2023**
(21) Application number: 21768942.1
(22) Date of filing: 12.03.2021
(51) Int. Cl.: G01N 30/02, G01N 30/26, G01N 30/34, G01N 30/88

(54) **HEMOGLOBIN ASSAY METHOD**

(30) Priority: 13.03.2020 JP 2020044507
(71) Applicant: Sekisui Medical Co., Ltd., Tokyo 103-0027 (JP)
(72) Inventor: UMETSU, Mina, Tokyo 103-0027 (JP); NEMOTO, Yuriko, Tokyo 103-0027 (JP); TAIRA, Hiroaki, Tokyo 103-0027 (JP)
(74) Representative: Schiener, Jens
(86) International application number: PCT/JP2021/009981
(87) International publication number: WO 2021/182599

(57) **Abstract**

Provided is a hemoglobin assay method by which HbA0 fraction can be separated with high accuracy.

The hemoglobin assay method includes allowing elution of a fraction containing hemoglobin A0 by ion exchange chromatography using an eluent containing a buffer at a concentration of less than 25 mM, wherein the buffer is a phosphate or a Good's buffer, and the eluent has a pH within ± 0.1 of a pKa of the buffer.

## Description

### Technical Field

The present invention relates to a hemoglobin assay method.

### Background Art

In the fields of organic chemistry, biochemistry, and medicine, liquid chromatography is generally used in the analysis of components in a specimen. For example, in the field of medicine, liquid chromatography is used in the analysis of hemoglobin (Hb). The most of the normal human Hbs are HbA, and the HbA includes mainly HbA0, and glycated HbA1c. The HbA1c is glycated hemoglobin in which sugar and hemoglobin in the blood are bound, and is used as a marker for, for example, diabetes. The blood HbA1c concentration (%), that is, the proportion of HbA1c to the whole Hbs in the blood reflects the average blood glucose level in the past 1 to 2 months, and is widely used as an index for diagnosing diabetes.

Patent Literatures 1 and 2 disclose a method for separating HbA1c fractions and HbA0 fractions by cation exchange chromatography, and the method includes:
using the following eluent A and eluent B in this order,
Eluent A: an eluent having a pH of 4.0 to 6.0, and containing (1) chaotropic ions, (2) an acid having an acid dissociation constant in the range of 3.5 or more and less than 6.5 and being at least one kind selected from the group consisting of a monocarboxylic acid, a dicarboxylic acid, a tricarboxylic acid, and an amino acid, or a salt thereof, and (3) an acid having an acid dissociation constant in the range of 6.5 or more and 9.5 or less and being at least any of an inorganic oxo acid and an amino acid, or a salt thereof,
Eluent B: an eluent having a pH higher than that of the eluent A by 0.5 to 3.0, and having a concentration of lower than that of the eluent A by 20 to 200 mmol/L, or a pH of 7.0 to 10.0; and further,
setting the pressure value generated in the measurement system to 9.8×10³ Pa or more and 19.6×10⁵ Pa or less.

Patent Literature 3 discloses a method for separating various hemoglobins including abnormal hemoglobins and thalassemia markers from a blood sample by cation exchange chromatography using an eluent that has a pH of 8.1 or more and an osmotic pressure of 40 mOsm/kg or less.

### Citation List

### Patent Literature

Patent Literature 1: JP 2014-095637 A
Patent Literature 2: JP 2014-095638 A
Patent Literature 3: WO 2019/203302

### Summary of Invention

### Technical Problem

In order to accurately calculate the hemoglobin (Hb) A1c concentration, it is required to separate HbA1c from other Hbs, particularly HbA0, with high accuracy in liquid chromatography analysis. When the separation accuracy of HbA0 is lowered, not only the HbA1c concentration cannot be calculated accurately, but also, for example, HbA2, HbS, and HbC having the peaks near HbA0, which are used as indexes of Hb malformation, cannot be detected.

However, in the actual chromatography analysis, there has been a case where the elution time and separation performance of HbA0 differ even under the same measurement conditions using the same specimens. From the study of the present inventors, it has been presumed that fluctuations of the elution time and separation performance were caused by the variations in eluent delivery conditions due to structural variations (for example, dimensional and assembly variations of components) in chromatography analyzers, and the slight differences in operation. The present invention is to provide a hemoglobin assay method by which HbA0 fractions can be separated with high accuracy without being affected by structural variations in analyzers and differences in operation.

### Solution to Problem

Accordingly, the present invention provides the following:
[1] A hemoglobin assay method, including
   allowing elution of a fraction containing hemoglobin A0 by ion exchange chromatography using an eluent containing a buffer at a concentration of less than 25 mM, wherein
   the buffer is a Good's buffer, and
   the eluent has a pH within ± 0.1 of a pKa of the buffer.
[2] The method as described in [1], wherein the Good's buffer is TES.
[3] The method as described in [1] or [2], wherein the eluent has an osmotic pressure of 60 mOsm/kg or less.
[4] The method as described in any one of [1] to [3], further including allowing elution of a fraction containing hemoglobin A1c by using an eluent A before the elution of the fraction containing hemoglobin A0, wherein the eluent A is a buffer solution having a pH of 4.0 to 6.8.
[5] The method as described in [4], wherein switching between the eluent A and the eluent containing a buffer at a concentration of less than 25 mM is performed by a stepwise gradient.
[6] The method as described in any one of [1] to [5], further including allowing passing through of an eluent B subsequent to the eluent containing a buffer at a concentration of less than 25 mM, wherein the eluent B is a buffer solution having a pH of 6.0 to 10.0.
[7] The method as described in [6], wherein switching between the eluent containing a buffer at a concentration of less than 25 mM and the eluent B is performed by a stepwise gradient.
[8] The method as described in any one of [1] to [7], wherein the ion exchange chromatography is cation exchange chromatography.
[9] The method as described in any one of [1] to [8], wherein the chromatography is high performance liquid chromatography.
[10] An eluent for hemoglobin A0 separation in ion exchange chromatography, including, a buffer at a concentration of less than 25 mM, wherein the eluent has a pH within ± 0.1 of a pKa of the buffer, and the buffer is a Good's buffer.
[11] The eluent as described in [10], wherein the Good's buffer is TES.
[12] The eluent as described in [10] or [11], wherein the eluent has an osmotic pressure of 60 mOsm/kg or less.
[13] The eluent as described in any one of [10] to [12], wherein the eluent is used after an eluent A in ion exchange chromatography, and the eluent A is a buffer solution having a pH of 4.0 to 6.8.
[14] The eluent as described in any one of [10] to [13], wherein the eluent is used before an eluent B in ion exchange chromatography, and the eluent B is a buffer solution having a pH of 6.0 to 10.0.

### Advantageous Effects of Invention

According to the present invention, HbA0 fractions can be separated from a sample with high accuracy without being affected by structural variations in analyzers and differences in operation. The present invention is useful for highly sensitive detection of various hemoglobin species and for accurate measurement of HbA1c concentration.

### Brief Description of Drawings

Fig. 1 shows HbA0 separations by HPLC using various kinds of eluents C. Each diagram shows the whole image (upper) of the chromatogram obtained by two HPLC devices (devices A and B), and the enlarged image (lower) of the A0 peak. The numerical values in the top of each diagram represent the TES concentration and the pH of the eluent C.
Fig. 2 is continued from Fig. 1.

### Description of Embodiments

The present invention relates to a hemoglobin assay method by ion exchange chromatography. As a sample used in the hemoglobin assay method according to the present invention (hereinafter, also referred to as the method according to the present invention), a blood sample containing hemoglobin, which is used in ordinary hemoglobin analysis, can be used. For example, a blood sample obtained by hemolyzing or diluting the blood collected from a human can be used.

Preferably, the chromatography performed in the method according to the present invention is liquid chromatography, and more preferably high-performance liquid chromatography (HPLC). The ion exchange chromatography in the present invention can be performed by using, for example, an ion-exchange column connected to a known liquid chromatography system, that is, a system equipped with a pump for eluent delivery, a sampler, a detector, and the like.

Preferably, the ion exchange chromatography performed in the method according to the present invention is cation exchange chromatography using a stationary phase having a cation-exchange group. Preferably, a cation-exchange column packed with the stationary phase having a cation-exchange group is used for the cation exchange chromatography. Examples of the cation-exchange group include a carboxyl group, a phosphoric acid group, and a sulfonic acid group, and among them, a sulfonic acid group is preferable.

Examples of the stationary phase include filler particles, and a porous material, and among them, filler particles are preferable. Examples of the filler particles include inorganic particles, and organic particle. Examples of the inorganic particles include particles formed of, for example, silica, or zirconia. Examples of the organic particles include natural polymer particles such as, cellulose, polyamino acid, or chitosan, and synthetic polymer particles such as, polystyrene, or polyacrylic acid ester. Preferable examples of the stationary phase having a cation-exchange group include a filler containing crosslinked polymer particles obtained by polymerizing a mixture of a non-crosslinkable hydrophilic acrylic monomer and a polyglycidyl ether, and a layer of an acrylic monomer having a cation-exchange group polymerized on a surface of the crosslinked polymer particles, which has been disclosed in JP 2011-047858 A.

In the method according to the present invention, as in the case of conventional hemoglobin analysis by ion exchange chromatography, hemoglobin in a sample is adsorbed onto a stationary phase (for example, ion-exchange column), and then the hemoglobin is eluted from the stationary phase by flowing an eluent over or through the stationary phase so that the hemoglobin in the sample is separated. Accordingly, the eluent used in the method according to the present invention is an eluent used for hemoglobin separation by ion exchange chromatography. More preferably, the eluent is an eluent used for hemoglobin elution from a stationary phase in cation exchange chromatography.

In the method according to the present invention, as the eluent for HbA0 separation used for elution of HbA0 from a stationary phase, a buffer solution containing a Good's buffer at a low concentration is used. Preferable examples of the Good's buffer include Bicine (N,N-bis(2-hydroxyethyl)glycine), Tricine (N-[tris(hydroxymethyl)methyl]glycine), and TES (N-tris(hydroxymethyl)methyl-2-aminoethanesulfonic acid), and among them, TES is preferable.

The concentration of the above-described buffer in the eluent for HbA0 separation is preferably less than 25 mM, more preferably 20 mM or less, further preferably 17.5 mM or less, and still further preferably 15 mM or less; and preferably 2 mM or more, more preferably 2.5 mM or more, further preferably 5 mM or more, and still further preferably 10 mM or more. Examples of the concentration range of the buffer in the eluent for HbA0 separation include preferably 2 mM or more and less than 25 mM, more preferably 2.5 mM or more and 20 mM or less, further preferably 5 mM or more and 17.5 mM or less, and still further preferably 10 mM or more and 15 mM or less.

The pH of the eluent for HbA0 separation can be adjusted on the basis of the pKa of the buffer contained in the eluent. The pH of the eluent for HbA0 separation is preferably within ± 0.1 of the pKa of the buffer, more preferably within ± 0.08 of the pKa of the buffer, further preferably within ± 0.05 of the pKa of the buffer, and still further preferably within ± 0.03 of the pKa of the buffer. Further, in the present specification, unless otherwise specifically described, the "pH" and "pKa" indicate the values of pH and pKa at 25°C, respectively. The pKa of a buffer can be calculated from the composition, and for example, the pKa of TES at 25°C is 7.55 (J. Phys. Chem. Ref. Data, Vol. 31, No. 2: 231-370, 2002).

The eluent for HbA0 separation may further contain an organic acid, an inorganic acid, or a salt thereof. Examples of the organic acid include citric acid, succinic acid, tartaric acid, and malic acid, and examples of the inorganic acid include hydrochloric acid, nitric acid, sulfuric acid, phosphoric acid, boric acid, acetic acid, and perchloric acid. Examples of the salt include a sodium salt, and a potassium salt. The eluent for HbA0 separation can contain any one or more kinds of these organic acids, inorganic acids, or salts thereof in combination.

The osmotic pressure of the eluent for HbA0 separation is preferably 45 mOsm/kg or less, and more preferably 40 mOsm/kg or less; and preferably 20 mOsm/kg or more, and more preferably 25 mOsm/kg or more. Examples of the range of osmotic pressure of the eluent for HbA0 separation include preferably from 20 to 45 mOsm/kg, and more preferably from 25 to 40 mOsm/kg. Note that the value of osmotic pressure in the present specification is referred to as a value of osmotic pressure measured by a cryoscopic method. The osmotic pressure can be measured by using a commercially available osmometer, for example, Osmometer 3250 (manufactured by Advanced Instruments). Further, in the present specification, the unit of osmotic pressure, "mOsm/kg" means mOsm/kgH₂O, and may also be expressed as "mOsm/L" or "mOsm".

In the method according to the present invention, a fraction containing HbA0 is separated from a sample by ion exchange chromatography using the above-described eluent for HbA0 separation. Preferably, in the method according to the present invention, in a similar manner to the conventional hemoglobin analysis by ion exchange chromatography, at first, the fraction containing hemoglobin A1c (HbA1c) is separated before separating the fraction containing HbA0.

The fraction containing HbA1c is eluted with an eluent A that is different from the above-described eluent for HbA0 separation. The eluent A may be a buffer solution containing a buffer. Preferably, the buffer is an acid or a salt thereof, which has a buffering ability at pH 4.0 to 6.8. Examples of the acid include an organic acid, and inorganic acid. Examples of the organic acid include citric acid, succinic acid, tartaric acid, malic acid, and salts of these acids, and examples of the inorganic acid include hydrochloric acid, nitric acid, sulfuric acid, phosphoric acid, boric acid, acetic acid, perchloric acid, and salts of these acids. The buffer solution used for the eluent A can contain any one or more kinds of these organic acids, inorganic acids, and salts thereof in combination. Among them, a buffer solution containing a phosphate, a succinate, or a perchlorate is preferable, and a buffer solution containing a succinate is more preferable. Examples of the phosphate include a sodium salt, and a potassium salt, and among them, monosodium phosphate, and disodium phosphate disodium are preferable. Examples of the succinate include a sodium salt, and a potassium salt, and among them, monosodium succinate, and disodium succinate are preferable. Examples of the perchlorate include sodium perchlorate. These phosphates, succinates, and perchlorates may be used alone or of two or more kinds thereof in combination. The concentration of the buffer in the eluent A may be 0.1 mM or more and 400 mM or less, and preferably 1 mM or more and 300 mM or less.

The pH of the eluent A is preferably pH 4.0 or more, more preferably pH 5.0 or more, and further preferably pH 5.2 or more; and preferably pH 6.8 or less, more preferably pH 6.0 or less, and further preferably pH 5.8 or less. The pH range of the eluent A is preferably from pH 4.0 to pH 6.8, more preferably from pH 5.0 to pH 6.0, and further preferably from pH 5.2 to pH 5.8. In addition, the osmotic pressure of the eluent A is preferably 160 mOsm/kg or more, and more preferably 180 mOsm/kg or more; and preferably 240 mOsm/kg or less, and more preferably 220 mOsm/kg or less. The range of osmotic pressure of the eluent A is preferably from 160 to 240 mOsm/kg, and more preferably from 180 to 220 mOsm/kg. In a preferable embodiment, the eluent A has a pH of 5.0 to 6.0, and has an osmotic pressure of 160 to 240 mOsm/kg, and more preferably 180 to 220 mOsm/kg. In a more preferable embodiment, the eluent A has a pH of 5.2 to 5.8, and has an osmotic pressure of 160 to 240 mOsm/kg, and more preferably 180 to 220 mOsm/kg.

In the method according to the present invention, subsequent to the passing through of the above-described eluent for HbA0 separation, an eluent B may be further passed through. The eluent B is an eluent having a composition different from those of the above-described eluent for HbA0 separation and the eluent A. The eluent B can elute fractions containing components such as HbA2, HbS, and HbC, which are eluted later than the fraction containing HbA0.

The eluent B may be any eluent conventionally used for elution of, for example, HbA0, HbA2, HbS, and HbC in conventional hemoglobin analysis by ion exchange chromatography. For example, the eluent B is a buffer solution, and examples of the buffer solution used for the eluent B include ones similar to those mentioned for the eluent A, and among them, a buffer solution containing a phosphate, a succinate, or a perchlorate is preferable, and a phosphate buffer solution is more preferable. The concentration of the buffer in the eluent B may be 0.1 mM or more and 400 mM or less, and preferably 1 mM or more and 300 mM or less. The pH of the eluent B is preferably pH 6.0 or more, more preferably pH 7.0 or more, and further preferably pH 7.5 or more; and preferably pH 10.0 or less, more preferably pH 9.0 or less, and further preferably 8.5 or less. The pH range of the eluent B is preferably from pH 6.0 to pH 10.0, more preferably from pH 7.0 to pH 9.0, and further preferably from pH 7.5 to pH 8.5. In addition, the osmotic pressure of the eluent B is preferably 150 mOsm/kg or more, more preferably 200 mOsm/kg or more, and further preferably 250 mOsm/kg or more; and preferably 500 mOsm/kg or less, more preferably 400 mOsm/kg or less, and further preferably 350 mOsm/kg or less. The range of osmotic pressure of the eluent B is preferably from 150 to 500 mOsm/kg, more preferably from 200 to 400 mOsm/kg, and further preferably from 250 to 350 mOsm/kg. In a preferable embodiment, the eluent B has a pH of 6.0 to 10.0, and has an osmotic pressure of 150 to 500 mOsm/kg. In a more preferable embodiment, the eluent B has a pH of 7.0 to 9.0, and has an osmotic pressure of 200 to 400 mOsm/kg. In a further preferable embodiment, the eluent B has a pH of 7.5 to 8.5, and has an osmotic pressure of 250 to 350 mOsm/kg.

The eluents used in the present invention (the above-described eluents A and B, and eluent for HbA0 separation) may contain a solvent, and additive agents such as a hemoglobin modifier, a binding agent to trivalent heme iron, a pH adjusting agent, and a surfactant, other than the above-described buffers.

Preferably, the eluent used in the present invention contains a hemoglobin modifier. As the hemoglobin modifier, any oxidizing agent may be accepted as long as it can change the heme iron of hemoglobin from divalent to trivalent to generate methemoglobin. Examples of the oxidizing agent include a nitrite, potassium ferricyanide, methylene blue, hydrogen peroxide, ascorbic acid, and hydrogen sulfide. Among them, a nitrite is preferable, and sodium nitrite, or potassium nitrite is more preferable. The concentration of the hemoglobin modifier in the eluent is preferably from 0.05 to 15 mmol/L, and more preferably from 1.0 to 10 mmol/L.

Preferably, the eluent used in the present invention contains a binding agent to trivalent heme iron. The binding agent to trivalent heme iron stabilizes the methemoglobin generated by the hemoglobin modifier and stabilizes the elution behavior. Examples of the binding agent to trivalent heme iron include an azide, and a cyanide. Examples of the azide include sodium azide, diphenylphosphoryl azide, 4-dodecylbenzenesulfonyl azide, 4-acetylaminobenzenesulfonyl azide, potassium azide, lithium azide, iron azide, hydrogen azide, lead azide, mercury azide, copper azide, and silver azide. Examples of the cyanide include potassium cyanide, hydrogen cyanide, sodium cyanide, silver cyanide, mercury cyanide, copper cyanide, lead cyanide, iron cyanide, lithium cyanide, and ammonium cyanide. Preferably, the binding agent to trivalent heme iron is an azide, and more preferably sodium azide. The concentration of the binding agent to trivalent heme iron in the eluent is preferably from 0.05 to 15 mmol/L, and more preferably from 0.5 to 10 mmol/L.

Examples of the pH adjusting agent include known acids and bases. Examples of the acid include hydrochloric acid, phosphoric acid, nitric acid, and sulfuric acid, and examples of the base include sodium hydroxide, potassium hydroxide, lithium hydroxide, magnesium hydroxide, barium hydroxide, and calcium hydroxide.

Examples of the solvent include water-soluble organic solvents such as methanol, ethanol, acetonitrile, and acetone. The concentration of the solvent is preferably such an extent that a salt or the like does not precipitate, for example, preferably 80% (v/v) or less, and more preferably in the range of 0.1% (w/w) or more and 50% (w/w) or less.

Preferably, in the method according to the present invention, fractions containing various hemoglobins are eluted while switching the above-described eluents A and B, and eluent for HbA0 separation. Preferably, in the method according to the present invention, gradient elution is performed by switching the eluents in the order of eluent A → eluent for HbA0 separation. More preferably, in the method according to the present invention, gradient elution is performed by switching the eluents in the order of eluent A → eluent for HbA0 separation → eluent B.

Preferably, in the gradient elution in the method according to the present invention, first, an eluent A (hereinafter, referred to as liquid A, or simply referred to as "A") is passed through at 100% to elute a fraction containing HbA1c. Next, a gradient is applied to the eluent to increase the proportion of an eluent for HbA0 separation (hereinafter, referred to as liquid C, or simply referred to as "C"), and the proportion of the liquid C is increased to 100%. A fraction containing HbA0 is eluted by the liquid C. The gradient from the liquid A to the liquid C is performed so as to be A : C = 100 : 0 → 0 : 100. The gradient from the liquid A to the liquid C may be a stepwise gradient or a linear gradient, and the mixture ratio of the stepwise gradient and the gradient of the linear gradient may be changed stepwise on the way. Preferably, the gradient from the liquid A to the liquid C is a stepwise type.

Preferably, next, the liquid C and the eluent B (hereinafter, referred to as liquid B, or simply referred to as "B") are switched. Preferably, the gradient from the liquid C to the liquid B is performed so as to be C : B = 100 : 0 → 0 : 100. The gradient from the liquid C to the liquid B may be a stepwise gradient or a linear gradient, and the mixture ratio of the stepwise gradient and the gradient of the linear gradient may be changed stepwise on the way. The liquid B elutes an Hb fraction (for example, a fraction containing HbA2, HbS, and HbC), which are eluted later than Hb A0.

If necessary, the liquid A may be passed through again after the liquid B. A passing through time of A : B = 100 : 0 may be arranged. The gradient from the liquid B to the liquid A may be a stepwise gradient or a linear gradient, and preferably a stepwise type.

In the method according to the present invention, by passing the above-described eluent for HbA0 separation through after the eluent A, an HbA0 fraction can be separated with high accuracy. Therefore, according to the method of the present invention, the peak of HbA0 can be clearly detected by chromatography analysis without being affected by structural variations in analyzers and differences in operation, and as a result, various hemoglobin species can be detected with a high sensitivity, and HbA1c concentration can be measured accurately.

### Examples

Hereinafter, the present invention is described in detail by way of Examples, however, the present invention is not limited to the Examples.

### (Reference Example 1: Preparation of column for hemoglobin separation)

Into a monomer mixture obtained by mixing 200 g of tetraethylene glycol monomethacrylate (manufactured by NOF CORPORATION) as a non-crosslinkable hydrophilic acrylic monomer with 200 g of polyethylene glycol diglycidyl ether (manufactured by NOF CORPORATION) as a polyglycidyl ether, 1.0 g of benzoyl peroxide (manufactured by NACALAI TESQUE, INC.) as a polymerization initiator was dissolved. The obtained mixture was dispersed in 5 L of 4 weight% polyvinyl alcohol ("Gohsenol GH-20", manufactured by The Nippon Synthetic Chemical Industry Co., Ltd.) aqueous solution, and the dispersed mixture was heated to 80°C under a nitrogen atmosphere while being stirred to perform polymerization reaction for 1 hour. After the temperature was lowered to 30°C to cool the resultant mixture, 100 g of 2-methacrylamide-2-methylpropanesulfonic acid (manufactured by TOAGOSEI CO., LTD.) was added as an acrylic monomer having a cation-exchange group to the reaction system, and then the obtained mixture was heated again to 80°C to perform polymerization reaction for 1 hour. The obtained crosslinked polymer particles were washed with ion-exchanged water and acetone to obtain crosslinked polymer particles in which a sulfonic acid group was introduced. The obtained column packing material for hemoglobin separation was filled in a stainless steel column having an inner diameter of 4 mm and a length of 20 mm to prepare a cation-exchange column for hemoglobin separation.

### (Reference Example 2: Preparation of sample)

A sample was prepared by appropriately dissolving and diluting Glyco Hb Control (manufactured by SYSMEX CORPORATION) with a 0.1% Triton X-100-containing phosphate buffer solution (pH 7.00).

### (Test 1)

The sample prepared in Reference Example 2 was subjected to hemoglobin analysis by HPLC. Two HPLC devices (devices A and B) of the same type were prepared, and by using each of the devices, the sample was analyzed under the following conditions.

### <Analysis conditions>

HPLC device: Prominence 20A series (manufactured by Shimadzu Corporation)
Detector: SPD-M20A (manufactured by Shimadzu Corporation)
Liquid delivery pump: LC-20AD (manufactured by Shimadzu Corporation)
Degassing unit: DGU-20A5R (manufactured by Shimadzu Corporation)
Column oven: CTO-20AC (manufactured by Shimadzu Corporation)
Autosampler: SIL-20AC (manufactured by Shimadzu Corporation)
Column: Cation-exchange column for hemoglobin separation prepared in Reference Example 1
Flow rate: 2.1 mL/min
Detection wavelength: 415 nm
Sample injection amount: 5 µL

### Eluent

Eluent A: a buffer solution containing 40 mmol/L sodium succinate, 55 mmol/L sodium perchlorate, and 1 mmol/L sodium azide (pH of 5.3, osmotic pressure of 200 mOsm/kg)
Eluent B: a buffer solution containing 45 mmol/L sodium phosphate, 100 mmol/L sodium perchlorate, and 9 mmol/L sodium azide (pH of 7.6, osmotic pressure of 300 mOsm/kg)
Eluent C: prescription shown in Table 1
Gradient: stepwise gradient (eluent A from 0 to 21 seconds → eluent C from exceeding 21 seconds to 39 seconds → eluent B from exceeding 39 seconds to 47 seconds → eluent A from exceeding 47 seconds to 90 seconds)

The pH (25°C) and osmotic pressure of the eluent were measured by a pH meter, F-52 (manufactured by HORIBA Ltd.), and Osmometer 3250 (manufactured by Advanced Instruments).

**[Table 1]**

| Eluent C | TES concentra tion (mmol/L) | Na nitrite concentra tion (mmol/L) | Na azide concentrat ion (mmol/L) | pH | Differen ce from pKa (TES) | Osmotic pressure (mOsm/kg) |
|---|---|---|---|---|---|---|
| C-1 | 10 | 5 | 1 | 7.55 | 0.00 | 28 |
| C-2 | 15 | 5 | 1 | 7.56 | 0.01 | 36 |
| C-3 | 17.5 | 5 | 1 | 7.47 | -0.09 | 38 |
| C-4 | 25 | 5 | 1 | 7.40 | -0.15 | 47 |
| C-5 | 62.5 | 5 | 1 | 7.23 | -0.32 | 94 |
| C-6 | 82.5 | 5 | 1 | 7.13 | -0.42 | 119 |
| C-7 | 100 | 5 | 1 | 7.10 | -0.45 | 140 |

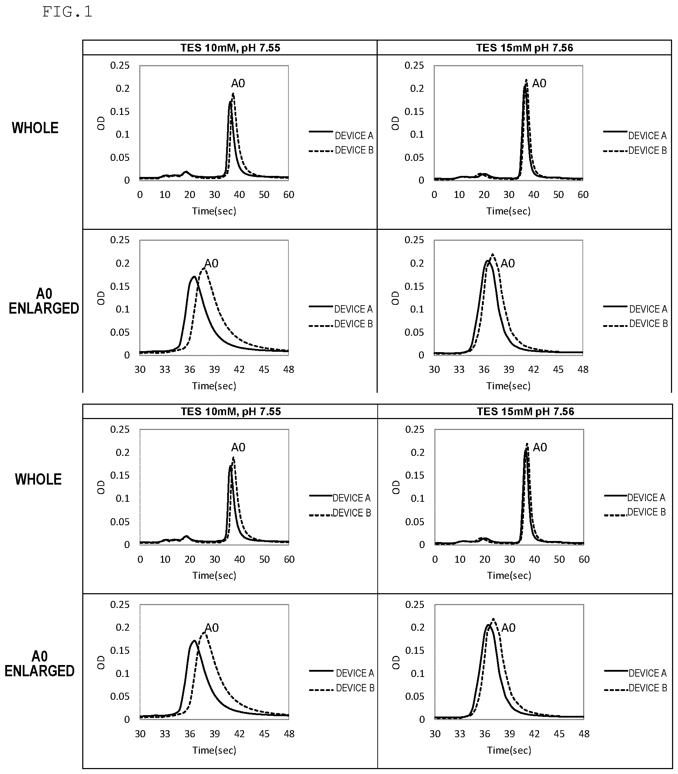

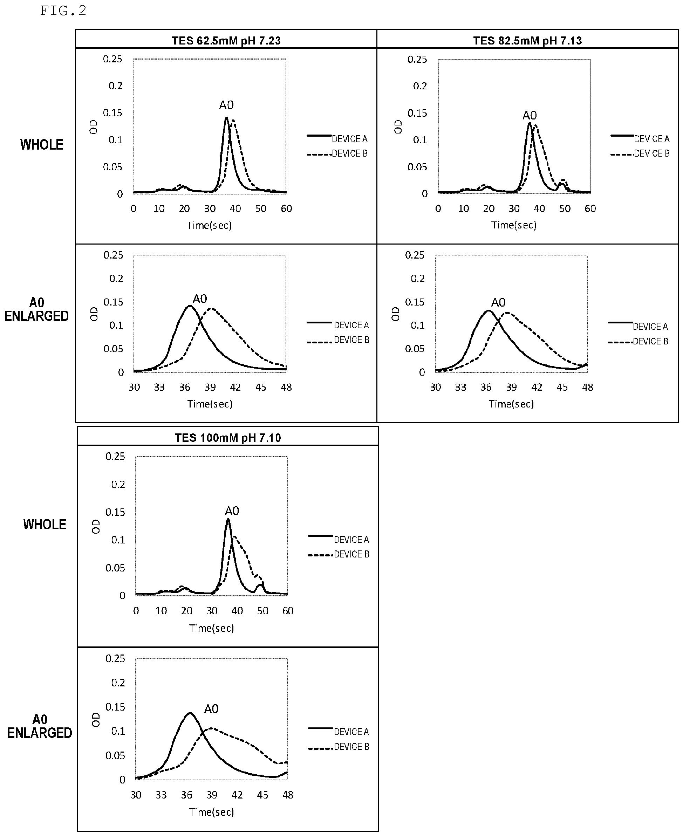

The analysis results of samples are shown in Figs. 1 to 2. Further, in Table 2, the elution time of HbA0 peak (top peak time) and full width at half maximum are shown in a case where each eluent C was used. In a case where an eluent C having a TES concentration of less than 25 mM and a difference between the pH and the pKa of TES within 0.1 was used, in any of the devices, a clear peak of HbA0 was obtained by chromatography, and further, the difference in the rise time to the peak, top peak time, and peak width between the devices became smaller.

**[Table 2]**

| | Eluent C | C-1 | C-2 | C-3 | C-4 | C-5 | C-6 | C-7 |
|---|---|---|---|---|---|---|---|---|
| | TES concentratio n | 10 mM | 15 mM | 17.5 mM | 25 mM | 62.5 mM | 82.5 mM | 100 mM |
| Device A | A0 Elution time (sec) | 36.6 | 36.7 | 36.0 | 37.1 | 36.7 | 36.4 | 36.4 |
| | Full width at half maximum | 2.60 | 3.24 | 3.00 | 3.60 | 5.76 | 6.12 | 5.04 |
| Device B | A0 Elution time (sec) | 37.8 | 37.8 | 37.6 | 39.2 | 39.2 | 38.5 | 38.9 |
| | Full width at half maximum | 3.00 | 3.96 | 3.20 | 5.04 | 6.48 | 7.20 | 9.36 |
| Δ A0 Elution time (sec) (Device B-Device A) | | 1.2 | 1.1 | 1.6 | 2.1 | 2.5 | 2.1 | 2.5 |

## Claims

1. A hemoglobin assay method, comprising
allowing elution of a fraction containing hemoglobin A0 by ion exchange chromatography using an eluent containing a buffer at a concentration of less than 25 mM, wherein
the buffer is a Good's buffer, and
the eluent has a pH within ± 0.1 of a pKa of the buffer.

2. The method according to claim 1, wherein the Good's buffer is TES.

3. The method according to claim 1 or 2, wherein the eluent has an osmotic pressure of 60 mOsm/kg or less.

4. The method according to any one of claims 1 to 3, further comprising allowing elution of a fraction containing hemoglobin A1c by using an eluent A before the elution of the fraction containing hemoglobin A0, wherein the eluent A is a buffer solution having a pH of 4.0 to 6.8.

5. The method according to claim 4, wherein switching between the eluent A and the eluent containing a buffer at a concentration of less than 25 mM is performed by a stepwise gradient.

6. The method according to any one of claims 1 to 5, further comprising allowing passing through of an eluent B subsequent to the eluent containing a buffer at a concentration of less than 25 mM, wherein the eluent B is a buffer solution having a pH 6.0 to 10.0.

7. The method according to claim 6, wherein switching between the eluent containing a buffer at a concentration of less than 25 mM and the eluent B is performed by a stepwise gradient.

8. The method according to any one of claims 1 to 7, wherein the ion exchange chromatography is cation exchange chromatography.

9. The method according to any one of claims 1 to 8, wherein the chromatography is high performance liquid chromatography.

10. An eluent for hemoglobin A0 separation in ion exchange chromatography, comprising a buffer at a concentration of less than 25 mM, wherein the eluent has a pH within ± 0.1 of a pKa of the buffer, and the buffer is a Good's buffer.

11. The eluent according to claim 10, wherein the Good's buffer is TES.

12. The eluent according to claim 10 or 11, wherein the eluent has an osmotic pressure of 60 mOsm/kg or less.

13. The eluent according to any one of claims 10 to 12, wherein the eluent is used after an eluent A in ion exchange chromatography, and the eluent A is a buffer solution having a pH of 4.0 to 6.8.

14. The eluent according to any one of claims 10 to 13, wherein the eluent is used before an eluent B in ion exchange chromatography, and the eluent B is a buffer solution having a pH 6.0 to 10.0.
